# EUROPEAN PATENT APPLICATION

(11) **EP 4 213 571 A1**
(43) Date of publication of application: **19.07.2023**
(21) Application number: 21879102.8
(22) Date of filing: 18.08.2021
(51) Int. Cl.: H04W 72/12

(54) **DATA TRANSMISSION METHOD AND APPARATUS, AND STORAGE MEDIUM AND MOBILE TERMINAL**

(30) Priority: 12.10.2020 CN 202011086212
(71) Applicant: GUANGDONG OPPO MOBILE TELECOMMUNICATIONS CORP., LTD., Dongguan, Guangdong 523860 (CN)
(72) Inventor: LIU, Jun, Dongguan, Guangdong 523860 (CN)
(74) Representative: Ipside
(86) International application number: PCT/CN2021/113236
(87) International publication number: WO 2022/078055

(57) **Abstract**

A method and device for data transmission, a storage medium, and a mobile terminal are provided in implementations of the disclosure. The method includes the following. A first subframe corresponding to a current transmission period is determined. A second subframe corresponding to a next transmission period is determined according to the first subframe, a preset period, and a time-domain adjustment amount. A target frequency-domain resource corresponding to the second subframe is determined. Data to-be-transmitted is determined and the data to-be-transmitted is transmitted on the target frequency-domain resource in the second subframe.

## Description

### CROSS-REFERENCE TO RELATED APPLICATION(S)

This application claims priority to Chinese Patent Application No. 202011086212.8, filed October 12, 2020, and entitled "METHOD AND DEVICE FOR DATA TRANSMISSION, STORAGE MEDIUM, AND MOBILE TERMINAL", the entire disclosure of which is hereby incorporated by reference.

### TECHNICAL FIELD

This disclosure relates to the field of mobile terminal technology, in particular to a method and device for data transmission, a storage medium, and a mobile terminal.

### BACKGROUND

Pedestrian-to-vehicle communication is one of application scenarios of cellular-vehicle-to-everything (C-V2X) communication. A pedestrian user equipment sends information such as a position of a pedestrian, such that a vehicle in pedestrian-to-vehicle communication knows information of the pedestrian, to ensure safety of the pedestrian. In pedestrian-to-vehicle communication, to reduce power consumption, the pedestrian-held terminal may have no downlink (DL) for receiving but only uplink (UL) for transmitting.

In the related data transmission scheme of C-V2X, when multiple pedestrian user equipments in the same area send data, it is easy to cause conflict of communication resources, which makes data sent by the pedestrian user equipments difficult to be successfully received by the vehicle.

### SUMMARY

Implementations of the disclosure provide a method and device for data transmission, a storage medium, and a mobile terminal, to reduce conflict of communication resources between pedestrian user equipments and improve a probability of successful information transmission.

In a first aspect, implementations of the disclosure provide a method for data transmission. The method includes the following.

A first subframe corresponding to a current transmission period is determined. A second subframe corresponding to a next transmission period is determined according to the first subframe, a preset period, and a time-domain adjustment amount. A target frequency-domain resource corresponding to the second subframe is determined. Data to-be-transmitted is determined and the data to-be-transmitted is transmitted on the target frequency-domain resource in the second subframe.

In a second aspect, implementations of the disclosure further provide a device for data transmission. The device for data transmission includes a first determining module, a subframe calculating module, a resource determining module, and a data transmission module.

The first determining module is configured to determine a first subframe corresponding to a current transmission period. The subframe calculating module is configured to determine a second subframe corresponding to a next transmission period according to the first subframe, a preset period, and a time-domain adjustment amount. The resource determining module is configured to determine a target frequency-domain resource corresponding to the second subframe. The data transmission module is configured to determine data to-be-transmitted and transmit the data to-be-transmitted on the target frequency-domain resource in the second subframe.

In a third aspect, implementations of the disclosure further provide a storage medium. The storage medium stores a computer program. When run on a computer, the computer program causes the computer to perform the following.

A first subframe corresponding to a current transmission period is determined. A second subframe corresponding to a next transmission period is determined according to the first subframe, a preset period, and a time-domain adjustment amount. A target frequency-domain resource corresponding to the second subframe is determined. Data to-be-transmitted is determined and the data to-be-transmitted is transmitted on the target frequency-domain resource in the second subframe.

In a fourth aspect, implementations of the disclosure further provide a mobile terminal. The mobile terminal includes a memory storing computer programs and a processor. The processor is configured to invoke the computer programs to: determine a first subframe corresponding to a current transmission period; determine a second subframe corresponding to a next transmission period according to the first subframe, a preset period, and a time-domain adjustment amount; determine a target frequency-domain resource corresponding to the second subframe; and determine data to-be-transmitted and transmit the data to-be-transmitted on the target frequency-domain resource in the second subframe.

### BRIEF DESCRIPTION OF THE DRAWINGS

To illustrate technical solutions of implementations of the disclosure more clearly, a brief description of drawings used in the description of the implementations will be given below. Apparently, the drawings described below are merely some implementations of the disclosure, and for those skilled in the art, other drawings may be obtained from these drawings without creative effort.
FIG. 1 is a first schematic flow chart of a method for data transmission provided in implementations of the disclosure.
FIG. 2 is a schematic diagram of a first scenario of a method for data transmission provided in implementations of the disclosure.
FIG. 3 is a schematic diagram of a second scenario of a method for data transmission provided in implementations of the disclosure.
FIG. 4 is a schematic diagram of a third scenario of a method for data transmission provided in implementations of the disclosure.
FIG. 5 is a second schematic flow chart of a method for data transmission provided in implementations of the disclosure.
FIG. 6 is a third schematic flow chart of a method for data transmission provided in implementations of the disclosure.
FIG. 7 is a schematic diagram of a fourth scenario of a method for data transmission provided in implementations of the disclosure.
FIG. 8 is a schematic structural diagram of a device for data transmission provided in implementations of the disclosure.
FIG. 9 is a first schematic structural diagram of a mobile terminal provided in implementations of the disclosure.
FIG. 10 is a second schematic structural diagram of a mobile terminal provided in implementations of the disclosure.

### DETAILED DESCRIPTION

The technical solutions in implementation of the disclosure will be clearly and completely described below in conjunction with drawings in the implementation of the disclosure. Apparently, the described implementations are merely part of rather than all of the implementations of the disclosure. For those skilled in the art, all other implementations obtained without creative effort based on the implementations in the disclosure are within the scope of protection of the disclosure.

The term "implementation" referred to herein means that a particular feature, structure, or feature described in connection with the implementation may be contained in at least one implementation of the disclosure. The phrase present in various places in the specification does not necessarily refer to the same implementation, nor does it refer to an independent or alternative implementation that is mutually exclusive with other implementations. It is expressly and implicitly understood by those skilled in the art that the implementations described herein may be combined with other implementations.

Implementations of the disclosure provide a method for data transmission. The method includes the following. A first subframe corresponding to a current transmission period is determined. A second subframe corresponding to a next transmission period is determined according to the first subframe, a preset period, and a time-domain adjustment amount. A target frequency-domain resource corresponding to the second subframe is determined. Data to-be-transmitted is determined and the data to-be-transmitted is transmitted on the target frequency-domain resource in the second subframe.

In some implementations, the target frequency-domain resource corresponding to the second subframe is determined as follows. A resource pool corresponding to the second subframe is determined. A frequency-domain resource is randomly selected from the resource pool as the target frequency-domain resource.

In some implementations, the resource pool corresponding to the second subframe is determined as follows. A semi-persistent scheduling period corresponding to the current transmission period is determined, where one semi-persistent scheduling period includes multiple consecutive transmission periods. An idle frequency-domain resource in the second subframe is determined from a configured resource for the semi-persistent scheduling period. The resource pool corresponding to the second subframe is formed based on the idle frequency-domain resource.

In some implementations, the target frequency-domain resource corresponding to the second subframe is determined as follows. A semi-persistent scheduling period corresponding to the current transmission period is determined. A frequency-domain resource used in the first subframe is determined as the target frequency-domain resource, when the second subframe is within the semi-persistent scheduling period.

In some implementations, the method further includes the following. A frequency-domain resource is determined from a configured resource for a next semi-persistent scheduling period as the target frequency-domain resource, when the second subframe is not within the semi-persistent scheduling period.

In some implementations, the second subframe corresponding to the next transmission period is determined according to the first subframe, the preset period, and the time-domain adjustment amount as follows. The time-domain adjustment amount is determined, and the preset period according to the time-domain adjustment amount is prolonged or shortened. The second subframe is determined by calculating according to the first subframe and the prolonged or shortened preset period.

In some implementations, the target frequency-domain resource includes a physical sidelink shared channel, a physical sidelink control channel, and a demodulation reference signal.

Implementations of the disclosure provide a method for data transmission. The method for data transmission can be executed by a device for data transmission provided in implementations of the disclosure or a mobile terminal integrated with the device for data transmission, where the device for data transmission may be implemented in the form of hardware or software. The mobile terminal can be a device supporting cellular network such as a smart phone, a tablet computer, a smart wearable device, etc.

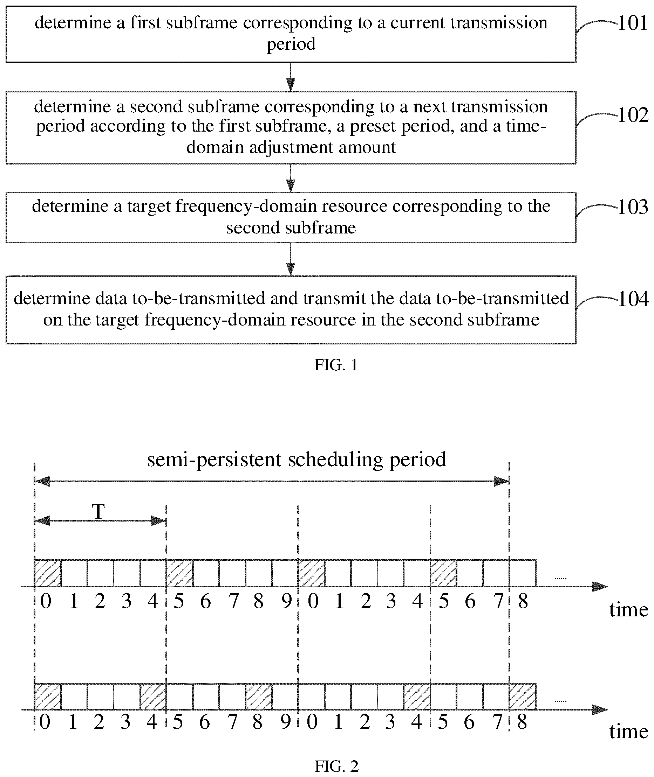

Referring to FIG. 1, FIG. 1 is a first schematic flow chart of a method for data transmission provided in implementations of the disclosure. The procedure of the method for data transmission provided in implementations of the disclosure can be as follows.

In 101, a first subframe corresponding to a current transmission period is determined.

The 4th generation (4G) mobile communication system and the 5th generation (5G) mobile communication system can support V2X communication. V2X communication supported in a cellular communication system such as the 4G communication system, the 5G communication system, etc. may be referred to as C-V2X communication. C-V2X communication includes vehicle-to-vehicle (V2V) communication, vehicle-to-infrastructure (V2I) communication, vehicle to pedestrian/pedestrian to vehicle (V2P/P2V) communication, etc. The solutions in implementations of the disclosure can be applied to P2V communication. The communication between a pedestrian user equipment(s) and a vehicle(s) and between vehicles can be achieved through side links.

In application of Internet of vehicles based on public safety, the pedestrian user equipment (PUE) needs to obtain a communication resource, to send early warning information to nearby vehicles in a scenario such as crossing the road. For example, the pedestrian user equipment sends related data such as position information and walking speed on the communication resource obtained, and the vehicle will give way to the pedestrian after the data such as position information is obtained. The pedestrian user equipment herein is a mobile terminals held or carried by the pedestrian.

The communication resource includes a time-domain resource and a frequency-domain resource, and the combination thereof may also be referred to as a time-frequency resource. A resource pool is formed by taking the time domain as the horizontal axis and the frequency domain as the vertical axis. In the time domain, one subframe is 1 ms, and one subframe may include 14 consecutive symbols. The basic unit in the frequency domain is subcarrier, and the subcarrier spacing is 15 kHz. One resource block (RB) includes 12 consecutive subcarriers in the frequency domain. RB is the smallest unit of the frequency-domain resource that can be allocated to a user.

In addition, in the frequency domain, a total bandwidth is divided into several subchannels by the network through signaling, and one subchannel may occupy several RBs. The number of RBs occupied by the subchannel is generally pre-configured in the protocol of C-V2X communication. For example, if the total bandwidth is 10MHz, there are 50 RBs in total, and if a subchannel size indicated by the network is 5 RBs, the total bandwidth includes 10 subchannels. When selecting the frequency-domain resource, the pedestrian user equipment only needs to select one of the subchannels to send data.

The pedestrian user equipment periodically sends related data such as location information, and the vehicle will also detect signals in the manner specified in the protocol of P2V communication, to obtain the location information sent by the pedestrian user equipment, thereby giving way to the pedestrian. In addition, it can be understood that the pedestrian user equipment only needs to send the related data, and the vehicle does not need to feed back information to the pedestrian user equipment. To reduce power consumption, the pedestrian user equipment may not have a downlink (DL) for receiving but only an uplink (UL) for transmitting.

In the pedestrian-vehicle communication, the time-frequency resource for the pedestrian user equipment can be configured through semi-persistent scheduling. In each semi-persistent scheduling period, the time-frequency resource is configured for the pedestrian user equipment once. The pedestrian user equipment has two side link transmission modes, that is, a random resource-selection mode and a partial resource-sensing mode. In the random resource-selection mode, the pedestrian user equipment randomly selects a resource for communication from a resource pool according to a fixed transmission period, and use the same resource for communication in each transmission period in one semi-persistent scheduling period. However, a conflict rate is relatively high in this resource selection mode.

For example, in some scenarios such as intersections and pedestrian passages, there are a lot of pedestrian user equipments. If the pedestrian user equipments each send data according to a fixed period and a fixed subchannel in one semi-persistent scheduling period, it is prone to occur resource conflict, that is, different pedestrian user equipments are prone to randomly select the same time-frequency resource to send data, which will cause the vehicle to fail to receive data.

To solve the technical problem, in solutions of implementations of the disclosure, the related random resource-selection mode is further optimized. Before each data transmission, the length of the transmission period is prolonged or shortened. Thus, in the process of data transmission, the pedestrian user equipment can dynamically adjust the length of the transmission period, effectively reducing a conflict probability of transmission resources between pedestrian user equipments.

FIG. 2 is a schematic diagram of a first scenario of a method for data transmission provided in implementations of the disclosure. On the horizontal axis (representing the time domain), the time-domain resource is divided into consecutive subframes. One small square in the figure represents one subframe and one subframe is 1ms. The consecutive subframes are numbered with ten digits 0-9 repetitively. One semi-persistent scheduling period includes multiple consecutive transmission periods T. The pedestrian user equipment transmits data every other transmission period.

After transmitting the data in the current transmission period, the pedestrian user equipment determines a subframe corresponding to the current transmission period and records a subframe number of the subframe. Herein, to distinguish the subframe from a subframe used in a next transmission period, the subframe used for transmitting data in the current transmission period is recorded as the first subframe, and the subframe used for transmitting data in the next transmission period is recorded as a second subframe.

In 102, the second subframe corresponding to the next transmission period is determined according to the first subframe, a preset period, and a time-domain adjustment amount.

After a subframe number of the first subframe is obtained, the length of the transmission period is dynamically prolonged or shortened. In some implementations, the second subframe corresponding to the next transmission period is determined according to the first subframe, the preset period, and the time-domain adjustment amount as follows. The time-domain adjustment amount is determined, and the preset period is prolonged or shortened according to the time-domain adjustment amount. The second subframe is determined by calculating according to the first subframe and the prolonged or shortened preset period.

In the implementation, the time-domain adjustment amount may be a preset value, for example, the time-domain adjustment amount may be 1ms. The pedestrian user equipment may randomly choose to prolong or shorten the transmission period by 1ms, to obtain a new transmission period, and determine the second subframe according to the new transmission period and the first subframe. Specifically, the subframe number of the first subframe is added to the adjusted transmission period, and then a modulo operation is performed on the obtained sum, to obtain the subframe number of the second subframe. The divisor of the modulo operation is 10. In other implementations, if other numbering manners for subframe numbers are adopted, a corresponding divisor is taken.

It should be noted that, herein, the time-domain adjustment amount being 1ms is for illustration only. In other implementations, other values can be adopted. Generally, an integer can be selected from (0, T) as the time-domain adjustment amount, where T is the transmission period and the unit of T is ms. It is also understood that, transmission periods preset by different pedestrian user equipments may be different.

Alternatively, in other implementations, it is not necessary to preset the time-domain adjustment amount but, when the time-domain adjustment amount is determined, an integer is randomly selected from (0, T) as the time-domain adjustment amount, and then the subframe number of the second subframe is calculated in the same manner as the previous implementation.

In 103, a target frequency-domain resource corresponding to the second subframe is determined.

After the time-domain resource is determined, the target frequency-domain resource is to be determined next. Herein, the target frequency-domain resource mainly refers to a target subchannel composed of multiple consecutive RBs selected from the resource pool.

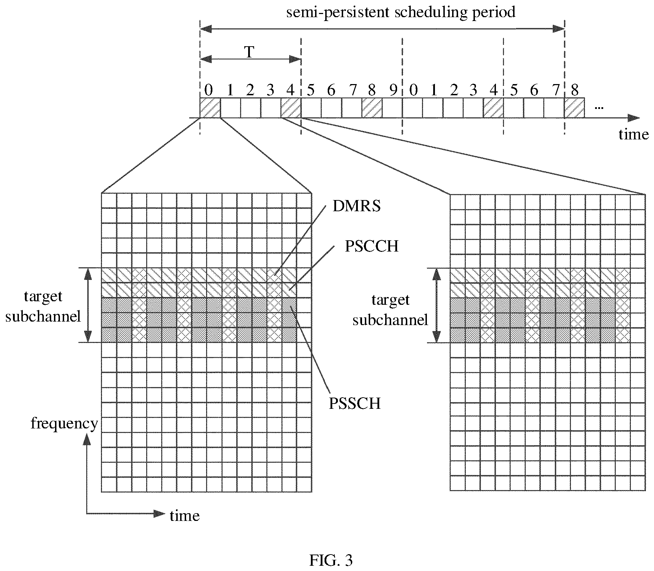

For example, the same subchannel is selected for each transmission period in one semi-persistent scheduling period to transmit data, and a target frequency-domain resource to be used is re-determined in a new semi-persistent scheduling period. Referring to FIG. 3, FIG. 3 is a schematic diagram of a second scenario of a method for data transmission provided in implementations of the disclosure. After the second subframe is determined, one subchannel is randomly selected as the target subchannel from a resource pool pre-configured for the second subframe.

The multiple RBs in the target subchannel are allocated to demodulation reference signal (DMRS), physical sidelink shared channel (PSSCH), and physical sidelink control channel (PSCCH) according to provision of the P2V protocol.

The PSCCH time-frequency resource is used for transmission of control information, the PSSCH time-frequency resource is used for transmission of service data, and the DMRS is used for related demodulation of the PSSCH and the PSCCH. The number and position of RBs occupied by the DMRS, the PSCCH, and the PSSCH in a subchannel of a subframe are generally pre-configured in the protocol of C-V2X communication. For example, assuming that the total bandwidth of the resource pool in FIG. 3 is 10MHz, there are 50 RBs in total, and if the subchannel size indicated by the network is 5 RBs, the total bandwidth includes 10 subchannels (where four consecutive subchannels are indicated in the figure). In one subchannel, the DMRS occupies all RBs of the 2nd, 5th, 8th, and 11th symbols in the time domain, and for other RBs except for the RBs of the 2nd, 5th, 8th, and 11th symbols, the PSCCH occupies first two RBs of the subchannel and PSSCH occupy next three RBs of the subchannel.

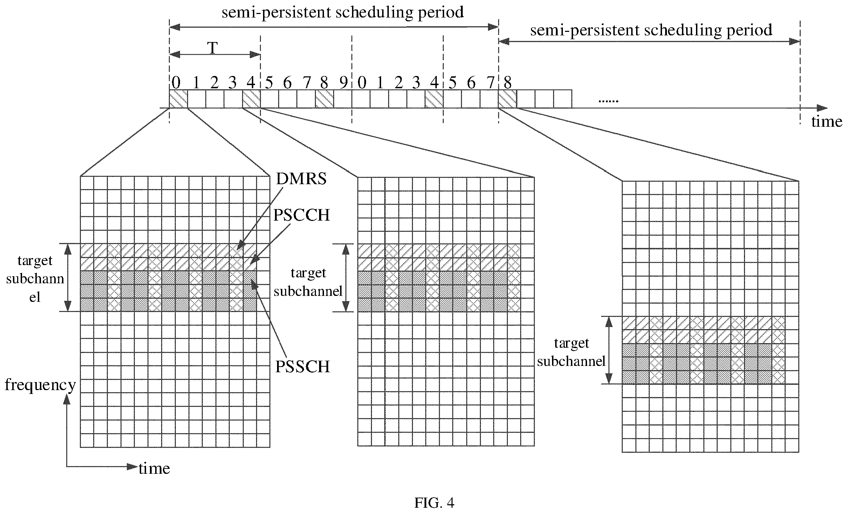

Referring to FIG. 4, FIG. 4 is a schematic diagram of a third scenario of a method for data transmission provided in implementations of the disclosure. When the semi-persistent scheduling period illustrated in FIG. 3 ends and the new semi-persistent scheduling period begins, the target frequency-domain resource can be re-selected from the resource pool. For example, a target subchannel illustrated in FIG. 4 can be determined through random selection, which is different from the target subchannel used in the previous semi-persistent scheduling period.

In 104, data to-be-transmitted is determined and the data to-be-transmitted is transmitted on the target frequency-domain resource in the second subframe.

After the target subchannel is determined, the data to-be-transmitted is determined, for example, data such as current position information, moving speed, and moving direction of the pedestrian user equipment are taken as the data to-be-transmitted, and the data to-be-transmitted is transmitted on the selected target channel in the second subframe, so that nearby vehicles can receive the data and give way to the pedestrian according to the data.

When implemented, the disclosure is not limited by the order of execution of various operations described, and some operations may be performed in other orders or at the same time without conflict.

As can be seen from the above, when transmitting information periodically, the pedestrian user equipment determines the first subframe corresponding to the current transmission period and determines the second subframe corresponding to the next transmission period according to the first subframe, the preset period, and the time-domain adjustment amount. That is, the pedestrian user equipment first determines the time-domain resource, then determines the target frequency-domain resource corresponding to the second subframe, and then determines the data to-be-transmitted and sends the data to-be-transmitted on the determined frequency-domain resource in the second subframe. In this way, when selecting each transmission subframe, on the basis of the transmission period, the interval between two adjacent subframes is dynamically adjusted based on the time-domain adjustment amount, which effectively reduces the conflict probability of transmission resources between pedestrian user equipments and improves the probability that the information transmitted by the pedestrian user equipment can be correctly received by vehicles.

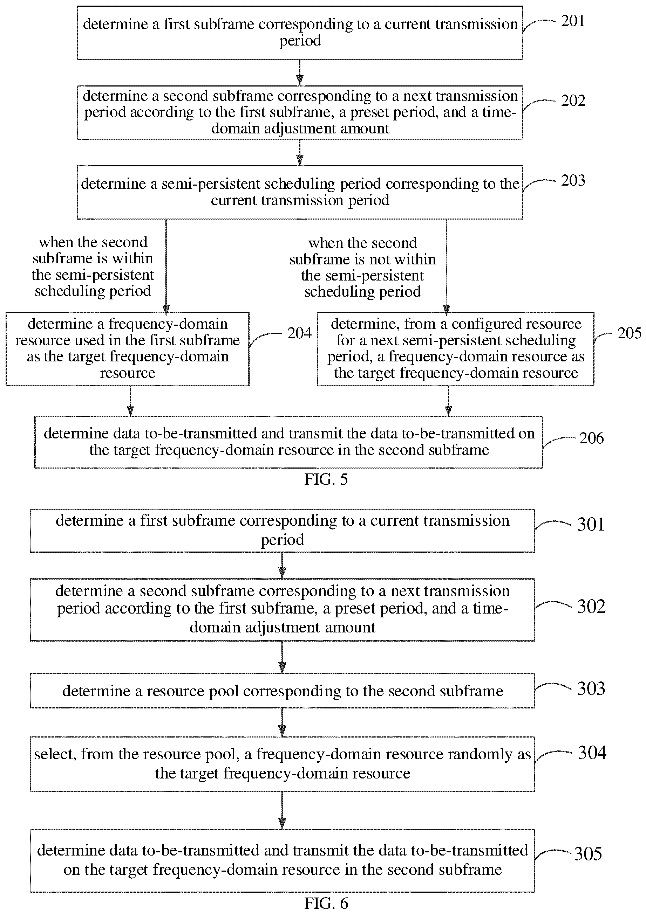

FIG. 5 is a second schematic flow chart of a method for data transmission provided in implementations of the disclosure. In some implementations, the method includes the following.

In 201, a first subframe corresponding to a current transmission period is determined.

In the implementation, in the pedestrian-vehicle communication, a time-frequency resource for a pedestrian user equipment can be configured through semi-persistent scheduling. In each semi-persistent scheduling period, the time-frequency resource is configured for the pedestrian user equipment once. The pedestrian user equipment periodically sends related data such as location information, and a vehicle will also detect signals in the manner specified in the protocol of P2V communication, to obtain the location information sent by the pedestrian user equipment, thereby giving way to the pedestrian.

After transmitting the data in the current transmission period, the pedestrian user equipment determines a subframe corresponding to the current transmission period and records a subframe number of the subframe. Herein, to distinguish the subframe from a subframe used in a next transmission period, the subframe used for transmitting data in the current transmission period is recorded as the first subframe, and the subframe used for transmitting data in the next transmission period is recorded as a second subframe.

In 202, the second subframe corresponding to the next transmission period is determined according to the first subframe, a preset period, and a time-domain adjustment amount.

After a subframe number of the first subframe is obtained, the length of the transmission period is dynamically prolonged or shortened. In the implementation, the time-domain adjustment amount may be a preset value, for example, the time-domain adjustment amount may be 1ms. The pedestrian user equipment may randomly choose to prolong or shorten the transmission period by 1ms, to obtain a new transmission period, and determine the second subframe according to the new transmission period and the first subframe. Specifically, the subframe number of the first subframe is added to the adjusted transmission period, and then a modulo operation is performed on the obtained sum, to obtain the subframe number of the second subframe. The divisor of the modulo operation is 10. In other implementations, if other numbering manners for subframe numbers are adopted, a corresponding divisor is taken.

In 203, a semi-persistent scheduling period corresponding to the current transmission period is determined.

After the second subframe to be used in the next transmission period is determined, the semi-persistent scheduling period corresponding to the current transmission period is determined. If the second subframe is within the semi-persistent scheduling period, the method proceeds to 204; if the second subframe is not within the semi-persistent scheduling period, the method proceeds to 205.

In 204, a frequency-domain resource used in the first subframe is determined as the target frequency-domain resource.

In 205, a frequency-domain resource is determined from a configured resource for a next semi-persistent scheduling period as the target frequency-domain resource.

When the second subframe is in the semi-persistent scheduling period where the current transmission period is located, a frequency-domain resource the same as the frequency-domain resource in the first subframe is still used to transmit data without resource reselection, to improve the efficiency of data transmission.

When the second subframe is not in the semi-persistent scheduling period where the current transmission period is located, it indicates that the next transmission period falls into a new semi-persistent scheduling period, and the frequency-domain resource is determined from the configured resource for the next semi-persistent scheduling period as the target frequency-domain resource. For example, a subchannel is randomly selected from a resource pool as a target channel.

In 206, data to-be-transmitted is determined and the data to-be-transmitted is transmitted on the target frequency-domain resource in the second subframe.

After the target subchannel is determined, the data to-be-transmitted is determined, for example, data such as current position information, moving speed, and moving direction of the pedestrian user equipment are taken as the data to-be-transmitted, and the data to-be-transmitted is transmitted on the selected target channel in the second subframe, so that nearby vehicles can receive the data and give way to the pedestrian according to the data.

In the method for data transmission of the implementation, when selecting each transmission subframe, on the basis of the transmission period, the interval between two adjacent subframes is dynamically adjusted based on the time-domain adjustment amount, which effectively reduces the conflict probability of transmission resources between pedestrian user equipments and improves the probability that the information transmitted by the pedestrian user equipment can be correctly received by vehicles.

Referring to FIG. 6, FIG. 6 is a third schematic flow chart of a method for data transmission provided in implementations of the disclosure. In some implementations, the method includes the following.

In 301, a first subframe corresponding to a current transmission period is determined.

In the implementation, in the pedestrian-vehicle communication, a time-frequency resource for a pedestrian user equipment can be configured through semi-persistent scheduling. In each semi-persistent scheduling period, the time-frequency resource is configured for the pedestrian user equipment once. The pedestrian user equipment periodically sends related data such as location information, and a vehicle will also detect signals in the manner specified in the protocol of P2V communication, to obtain the location information sent by the pedestrian user equipment, thereby giving way to the pedestrian.

After transmitting the data in the current transmission period, the pedestrian user equipment determines a subframe corresponding to the current transmission period and records a subframe number of the subframe. Herein, to distinguish the subframe from a subframe used in a next transmission period, the subframe used for transmitting data in the current transmission period is recorded as the first subframe, and the subframe used for transmitting data in the next transmission period is recorded as a second subframe.

In 302, the second subframe corresponding to the next transmission period is determined according to the first subframe, a preset period, and a time-domain adjustment amount.

After a subframe number of the first subframe is obtained, the length of the transmission period is dynamically prolonged or shortened. In the implementation, the time-domain adjustment amount may be a preset value, for example, the time-domain adjustment amount may be 1ms. The pedestrian user equipment may randomly choose to prolong or shorten the transmission period by 1ms, to obtain a new transmission period, and determine the second subframe according to the new transmission period and the first subframe. Specifically, the subframe number of the first subframe is added to the adjusted transmission period, and then a modulo operation is performed on the obtained sum, to obtain the subframe number of the second subframe. The divisor of the modulo operation is 10. In other implementations, if other numbering manners for subframe numbers are adopted, a corresponding divisor is taken.

In 303, a resource pool corresponding to the second subframe is determined.

In 304, a frequency-domain resource is randomly selected from the resource pool as the target frequency-domain resource.

After the second subframe is determined, the resource pool corresponding to the second subframe is determined. For example, the resource pool corresponding to the second subframe is determined as follows. A semi-persistent scheduling period corresponding to the current transmission period is determined, where one semi-persistent scheduling period includes multiple consecutive transmission periods. An idle frequency-domain resource(s) in the second subframe is determined from a configured resource for the semi-persistent scheduling period. The resource pool corresponding to the second subframe is formed based on the idle frequency-domain resource(s). The idle frequency-domain resource may be determined by detecting signals on each subchannel in the second subframe and used as the resource pool corresponding to the second subframe.

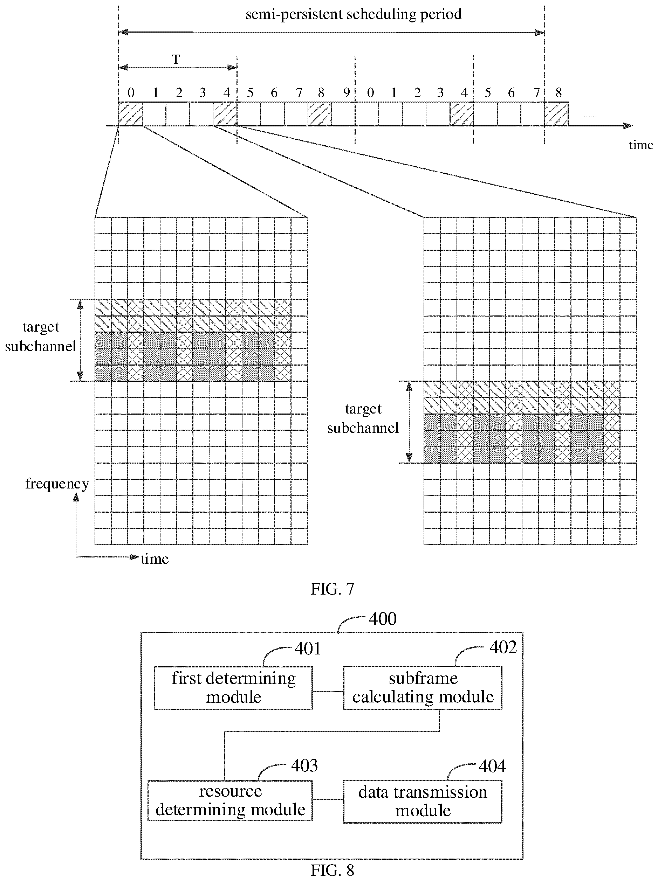

Then, a subchannel is randomly selected from the determined resource pool as a target subchannel, to transmit data. Referring to FIG. 7, FIG. 7 is a schematic diagram of a fourth scenario of a method for data transmission provided in implementations of the disclosure. The subchannel selected in the second subframe is likely to be different from the subchannel selected in the first subframe. When there are multiple pedestrian user equipments, if the pedestrian user equipments select subchannels from the resource pool in each transmission period, the subchannels selected are likely to be different, and thus the probability of conflict of transmission resources between the pedestrian user equipments can be reduced.

In 305, data to-be-transmitted is determined and the data to-be-transmitted is transmitted on the target frequency-domain resource in the second subframe.

After the target subchannel is determined, the data to-be-transmitted is determined, for example, data such as current position information, moving speed, and moving direction of the pedestrian user equipment are taken as the data to-be-transmitted, and the data to-be-transmitted is transmitted on the selected target channel in the second subframe, so that nearby vehicles can receive the data and avoid the pedestrian according to the data.

In the method for data transmission provided in the implementation, the transmission period is randomized and the frequency-domain resource is randomized, which effectively reduces the conflict probability of transmission resources between pedestrian user equipments and improves the probability that the information transmitted by the pedestrian user equipment can be correctly received by vehicles.

In an implementation, a device for data transmission is further provided. Referring to FIG. 8, FIG. 8 is a schematic structural diagram of a device 400 for data transmission provided in implementations of the disclosure. The device 400 for data transmission is applied to a mobile terminal. The device 400 for data transmission includes a first determining module 401, a subframe calculating module 402, a resource determining module 403, and a data transmission module 404.

The first determining module 401 is configured to determine a first subframe corresponding to a current transmission period. The subframe calculating module 402 is configured to determine a second subframe corresponding to a next transmission period according to the first subframe, a preset period, and a time-domain adjustment amount. The resource determining module 403 is configured to determine a target frequency-domain resource corresponding to the second subframe. The data transmission module 404 is configured to determine data to-be-transmitted and transmit the data to-be-transmitted on the target frequency-domain resource in the second subframe.

In some implementations, the resource determining module 403 is further configured to: determine a resource pool corresponding to the second subframe; and select, from the resource pool, a frequency-domain resource randomly as the target frequency-domain resource.

In some implementations, the resource determining module 403 is further configured to: determine a semi-persistent scheduling period corresponding to the current transmission period, where one semi-persistent scheduling period includes multiple consecutive transmission periods; determine, from a configured resource for the semi-persistent scheduling period, an idle frequency-domain resource in the second subframe; and form the resource pool corresponding to the second subframe based on the idle frequency-domain resource.

In some implementations, the resource determining module 403 is further configured to: determine a semi-persistent scheduling period corresponding to the current transmission period; and determine a frequency-domain resource used in the first subframe as the target frequency-domain resource, when the second subframe is within the semi-persistent scheduling period.

In some implementations, the resource determining module 403 is further configured to: determine, from a configured resource for a next semi-persistent scheduling period, a frequency-domain resource as the target frequency-domain resource, when the second subframe is not within the semi-persistent scheduling period.

In some implementations, the subframe calculating module 402 is further configured to: determine the time-domain adjustment amount, and prolong or shorten the preset period according to the time-domain adjustment amount; and determine the second subframe by calculating according to the first subframe and the prolonged or shortened preset period.

In some implementations, the target frequency-domain resource includes a physical sidelink shared channel, a physical sidelink control channel, and a demodulation reference signal.

It should be noted that, the device for data transmission provided in implementations of the disclosure and the method for data transmission in implementations of the above belong to the same concept, and through the device for data transmission, any method provided in implementations of the method for data transmission can be achieved. The implementation process of the device for data transmission is detailed in implementations of the method for data transmission, which will not be repeated herein.

As can be seen, the device 400 for data transmission provided in implementations of the disclosure includes the first determining module 401, the subframe calculating module 402, the resource determining module 403, and the data transmission module 404. When the pedestrian user equipment transmits information periodically, the first determining module 401 first determines the first subframe corresponding to the current transmission period, and the subframe calculating module 402 determines the second subframe corresponding to the next transmission period according to the first subframe, the preset period, and the time-domain adjustment amount. That is, the time-domain resource is first determined, the resource determining module 403 then determines the target frequency-domain resource corresponding to the second subframe, and then the data transmission module 404 determines the data to-be-transmitted and sends the data to-be-transmitted on the determined frequency-domain resource in the second subframe. In this way, when selecting each transmission subframe, on the basis of the transmission period, the interval between two adjacent subframes is dynamically adjusted based on the time-domain adjustment amount, which effectively reduces the conflict probability of transmission resources between pedestrian user equipments and improves the probability that the information transmitted by the pedestrian user equipment can be correctly received by vehicles.

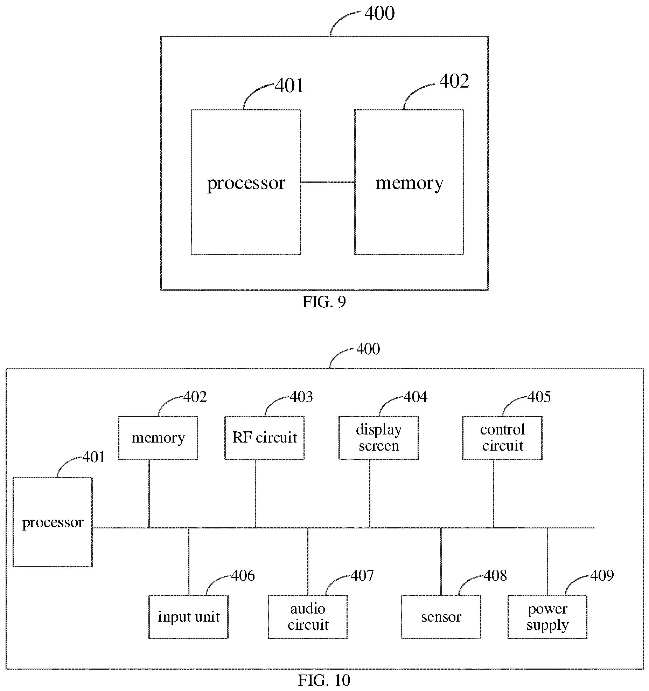

Implementations of the disclosure further provide a mobile terminal. The mobile terminal may be a device such as a smart phone, a tablet computer, or the like. Referring to FIG. 9, FIG. 9 is a first schematic structural diagram of a mobile terminal provided in implementations of the disclosure. The mobile terminal 500 includes a processor 501 and a memory 502. The processor 501 is electrically connected with the memory 502.

The processor 501 is a control center of the mobile terminal 500, connecting various parts of the entire mobile terminal via various interfaces and lines, and performing various functions and processing data of the mobile terminal by running or invoking computer programs stored in the memory 502 and invoking data stored in the memory 502, thereby monitoring the mobile terminal as a whole.

The memory 502 may be used to store computer programs and data. The computer programs stored in the memory 502 contain instructions executable in the processor. The computer programs can constitute various functional modules. The processor 501 is configured to execute various functional applications and data processing by invoking the computer programs stored in the memory 502.

In the implementation, the processor 501 in the mobile terminal 500 loads instructions corresponding to processes of one or more computer programs into the memory 502 according to the following operations, and the computer programs stored in the memory 502 are run by the processor 501 to realize various functions.

A first subframe corresponding to a current transmission period is determined. A second subframe corresponding to a next transmission period is determined according to the first subframe, a preset period, and a time-domain adjustment amount. A target frequency-domain resource corresponding to the second subframe is determined. Data to-be-transmitted is determined and the data to-be-transmitted is transmitted on the target frequency-domain resource in the second subframe.

In some implementations, referring to FIG. 10, FIG. 10 is a second schematic structural diagram of a mobile terminal provided in implementations of the disclosure. The mobile terminal 500 further includes a radio frequency (RF) circuit 503, a display screen 504, a control circuit 505, an input unit 506, an audio circuit 507, a sensor 508, and a power supply 509. The processor 501 is electrically connected with the RF circuit 503, the display screen 504, the control circuit 505, the input unit 506, the audio circuit 507, the sensor 508, and the power supply 509, respectively.

The radio frequency circuit 503 is configured to receive and transmit radio frequency signals, to communicate with network devices or other mobile terminals through wireless communication.

The display screen 504 may be configured to display information input by or provided to the user and various graphical user interfaces of the mobile terminal, which may be composed of image, text, icon, video and any combination thereof.

The control circuit 505 is electrically connected to the display screen 504, for controlling the display screen 504 to display information.

The input unit 506 may be configured to receive input number, character information, or user characteristic information (e.g. fingerprint) and generate keyboard, mouse, joystick, optical or trackball signal inputs related to user settings and function control. The input unit 506 may include a fingerprint recognition module.

The audio circuit 507 may provide an audio interface between the user and the mobile terminal through a speaker or microphone. The audio circuit 507 includes a microphone. The microphone is electrically connected with the processor 501. The microphone is configured to receive voice information input by a user.

The sensor 508 is used to collect external environment information. The sensor 508 may include one or more of an ambient brightness sensor, an acceleration sensor, an angular velocity sensor, and the like.

The power supply 509 is configured to supply power to various components of the mobile terminal 500. In some implementations, the power supply 509 may be logically connected with the processor 501 through a power management system, to implement functions such as charge and discharge management and power consumption management through the power management system.

Although not illustrated in the figure, the mobile terminal 500 may also include a camera Bluetooth module, or the like, which will not be repeated herein.

In the implementation, the processor 501 in the mobile terminal 500 loads instructions corresponding to processes of one or more computer programs into the memory 502 according to the following operations, and the computer programs stored in the memory 502 are run by the processor 501 to realize various functions.

A first subframe corresponding to a current transmission period is determined. A second subframe corresponding to a next transmission period is determined according to the first subframe, a preset period, and a time-domain adjustment amount. A target frequency-domain resource corresponding to the second subframe is determined. Data to-be-transmitted is determined and the data to-be-transmitted is transmitted on the target frequency-domain resource in the second subframe.

In some implementations, in determining the target frequency-domain resource corresponding to the second subframe, the processor 501 is further configured to: determine a resource pool corresponding to the second subframe; and select, from the resource pool, a frequency-domain resource randomly as the target frequency-domain resource.

In some implementations, in determining the target frequency-domain resource corresponding to the second subframe, the processor 501 is further configured to: determine a semi-persistent scheduling period corresponding to the current transmission period, where one semi-persistent scheduling period includes multiple consecutive transmission periods; determine, from a configured resource for the semi-persistent scheduling period, an idle frequency-domain resource in the second subframe; and form the resource pool corresponding to the second subframe based on the idle frequency-domain resource.

In some implementations, in determining the target frequency-domain resource corresponding to the second subframe, the processor 501 is further configured to: determine a semi-persistent scheduling period corresponding to the current transmission period; and determine a frequency-domain resource used in the first subframe as the target frequency-domain resource, when the second subframe is within the semi-persistent scheduling period.

As can be seen from the above, implementations of the disclosure provide a mobile terminal. When transmitting information periodically, the mobile terminal determines the first subframe corresponding to the current transmission period and determines the second subframe corresponding to the next transmission period according to the first subframe, the preset period, and the time-domain adjustment amount. That is, the mobile terminal first determines the time-domain resource, then determines the target frequency-domain resource corresponding to the second subframe, and then determines the data to-be-transmitted and sends the data to-be-transmitted on the determined frequency-domain resource in the second subframe. In this way, when selecting each transmission subframe, on the basis of the transmission period, the interval between two adjacent subframes is dynamically adjusted based on the time-domain adjustment amount, which effectively reduces the conflict probability of transmission resources between pedestrian user equipments and improves the probability that the information transmitted by the pedestrian user equipment can be correctly received by vehicles.

Implementations of the disclosure also provides a storage medium. The storage medium stores a computer program. When the computer program runs on the computer, the computer executes the method for data transmission of any of the above implementations.

It will be understood by those of ordinary skill in the art that, all or part of the various methods of the implementations described above may be accomplished by means of a computer program to instruct associated hardware. The computer program may be stored in a computer readable storage medium, which may include, but is not limited to, a read only memory (ROM), a random access memory (RAM), a disk or compact disc, and the like.

The terms "first", "second", "third", and the like used in the disclosure are used for distinguishing between different objects rather than describing a particular order. The terms "include" and "have" as well as variations thereof are intended to cover non-exclusive inclusion. For example, a process, method, system, product, or apparatus including a series of steps or modules is not limited to the listed steps or modules, it can optionally include other steps or modules that are not listed; alternatively, other steps or modules inherent to the process, method, product, or device can be included either.

The method and device for data transmission, the storage medium, and the mobile terminal of implementations of the disclosure are described in detail above. Some examples are used herein to illustrate the principle and implementation manners of the disclosure. The description of the above implementations is merely used to help understand the method and core idea of the disclosure. Meanwhile, for those of ordinary skill in the art, according to the idea of the disclosure, there will be changes in the implementation manner and the application scope. In summary, contents of this specification should not be construed as a limitation on the disclosure.

## Claims

1. A method for data transmission, comprising:
determining a first subframe corresponding to a current transmission period;
determining a second subframe corresponding to a next transmission period according to the first subframe, a preset period, and a time-domain adjustment amount;
determining a target frequency-domain resource corresponding to the second subframe; and
determining data to-be-transmitted and transmitting the data to-be-transmitted on the target frequency-domain resource in the second subframe.

2. The method of claim 1, wherein determining the target frequency-domain resource corresponding to the second subframe comprises:
determining a resource pool corresponding to the second subframe; and
selecting, from the resource pool, a frequency-domain resource randomly as the target frequency-domain resource.

3. The method of claim 2, wherein determining the resource pool corresponding to the second subframe comprises:
determining a semi-persistent scheduling period corresponding to the current transmission period, wherein one semi-persistent scheduling period comprises multiple consecutive transmission periods;
determining, from a configured resource for the semi-persistent scheduling period, an idle frequency-domain resource in the second subframe; and
forming the resource pool corresponding to the second subframe based on the idle frequency-domain resource.

4. The method of claim 1, wherein determining the target frequency-domain resource corresponding to the second subframe comprises:
determining a semi-persistent scheduling period corresponding to the current transmission period; and
determining a frequency-domain resource used in the first subframe as the target frequency-domain resource, when the second subframe is within the semi-persistent scheduling period.

5. The method of claim 4, wherein determining the target frequency-domain resource corresponding to the second subframe further comprises:
determining, from a configured resource for a next semi-persistent scheduling period, a frequency-domain resource as the target frequency-domain resource, when the second subframe is not within the semi-persistent scheduling period.

6. The method of claim 1, wherein determining the second subframe corresponding to the next transmission period according to the first subframe, the preset period, and the time-domain adjustment amount comprises:
determining the time-domain adjustment amount, and prolonging or shortening the preset period according to the time-domain adjustment amount; and
determining the second subframe by calculating according to the first subframe and the prolonged or shortened preset period.

7. The method of claim 1, wherein the target frequency-domain resource comprises a physical sidelink shared channel, a physical sidelink control channel, and a demodulation reference signal.

8. A device for data transmission, comprising:
a first determining module configured to determine a first subframe corresponding to a current transmission period;
a subframe calculating module configured to determine a second subframe corresponding to a next transmission period according to the first subframe, a preset period, and a time-domain adjustment amount;
a resource determining module configured to determine a target frequency-domain resource corresponding to the second subframe; and
a data transmission module configured to determine data to-be-transmitted and transmit the data to-be-transmitted on the target frequency-domain resource in the second subframe.

9. The device of claim 8, wherein the resource determining module is further configured to:
determine a resource pool corresponding to the second subframe; and
select, from the resource pool, a frequency-domain resource randomly as the target frequency-domain resource.

10. The device of claim 9, wherein the resource determining module is further configured to:
determine a semi-persistent scheduling period corresponding to the current transmission period, wherein one semi-persistent scheduling period comprises multiple consecutive transmission periods;
determine, from a configured resource for the semi-persistent scheduling period, an idle frequency-domain resource in the second subframe; and
form the resource pool corresponding to the second subframe based on the idle frequency-domain resource.

11. The device of claim 8, wherein the resource determining module is further configured to:
determine a semi-persistent scheduling period corresponding to the current transmission period; and
determine a frequency-domain resource used in the first subframe as the target frequency-domain resource, when the second subframe is within the semi-persistent scheduling period.

12. The device of claim 11, wherein the resource determining module is further configured to:
determine, from a configured resource for a next semi-persistent scheduling period, a frequency-domain resource as the target frequency-domain resource, when the second subframe is not within the semi-persistent scheduling period.

13. The device of claim 8, wherein the subframe calculating module is further configured to:
determine the time-domain adjustment amount, and prolong or shorten the preset period according to the time-domain adjustment amount; and
determine the second subframe by calculating according to the first subframe and the prolonged or shortened preset period.

14. The device of claim 8, wherein the target frequency-domain resource comprises a physical sidelink shared channel, a physical sidelink control channel, and a demodulation reference signal.

15. A storage medium storing a computer program which, when run on a computer, causes the computer to perform the method for data transmission of any of claims 1 to 7.

16. A mobile terminal, comprising:
a memory storing computer programs; and
a processor configured to invoke the computer programs to:
determine a first subframe corresponding to a current transmission period;
determine a second subframe corresponding to a next transmission period according to the first subframe, a preset period, and a time-domain adjustment amount;
determine a target frequency-domain resource corresponding to the second subframe; and
determine data to-be-transmitted and transmit the data to-be-transmitted on the target frequency-domain resource in the second subframe.

17. The mobile terminal of claim 16, wherein the processor is configured to invoke the computer programs to:
determine a resource pool corresponding to the second subframe; and
select, from the resource pool, a frequency-domain resource randomly as the target frequency-domain resource.

18. The mobile terminal of claim 17, wherein the processor is configured to invoke the computer programs to:
determine a semi-persistent scheduling period corresponding to the current transmission period, wherein one semi-persistent scheduling period comprises multiple consecutive transmission periods;
determine, from a configured resource for the semi-persistent scheduling period, an idle frequency-domain resource in the second subframe; and
form the resource pool corresponding to the second subframe based on the idle frequency-domain resource.

19. The mobile terminal of claim 16, wherein the processor is configured to invoke the computer programs to:
determine a semi-persistent scheduling period corresponding to the current transmission period; and
determine a frequency-domain resource used in the first subframe as the target frequency-domain resource, when the second subframe is within the semi-persistent scheduling period.

20. The mobile terminal of claim 19, wherein the processor is configured to invoke the computer programs to: determine, from a configured resource for a next semi-persistent scheduling period, a frequency-domain resource as the target frequency-domain resource, when the second subframe is not within the semi-persistent scheduling period.
